Europäisches Patentamt

European Patent Office

Office européen des brevets

(11) Publication number: **0 337 653**
**A2**

# (12) EUROPEAN PATENT APPLICATION

(21) Application number: 89303372.0

(22) Date of filing: 05.04.89

(51) Int. Cl.⁴: **D21C 1/06 , D21C 3/02 ,**
**D21C 9/16 , D21C 9/08 ,**
**D21C 9/02 , A23K 1/00 ,**
**//A21D13/02**

(30) Priority: 15.04.88 US 181770
15.04.88 US 181771
15.04.88 US 181774
15.04.88 US 181776

(43) Date of publication of application:
18.10.89 Bulletin 89/42

(84) Designated Contracting States:
AT BE CH DE ES FR GB GR IT LI LU NL SE

(71) Applicant: E.I. DU PONT DE NEMOURS AND
COMPANY
1007 Market Street
Wilmington Delaware 19898(US)

(72) Inventor: Jayawant, Madhusudan Dattatraya
882 Sharpless Road
Hockessin Delaware 19707(US)
Inventor: Chou, Yu-Chia Terry
27510 Valley Run Drive
Wilmington Delaware 19810(US)
Inventor: Garrison, David France
Box 154B Route 538
Mullica Hill New Jersey 08062(US)
Inventor: Lewis, William Isaac
4215 Spruce Avenue
Burlington Ontario L7L 1L1(CA)

(74) Representative: Woodcraft, David Charles et
al
BROOKES & MARTIN High Holborn House
52/54 High Holborn
London, WC1V 6SE(GB)

(54) Improved alkaline peroxide treatment of nonwoody lignocellulosic substrates.

(57) An improved process for delignifying and bleaching nonwoody, lignocellulosic material into products digestible by ruminants and ingestible by humans. The process comprises treating the substrate in an alkaline solution for a period of time prior to adding peroxide.

# IMPROVED ALKALINE PEROXIDE TREATMENT OF NONWOODY LIGNOCELLULOSIC SUBSTRATES

## FIELD OF INVENTION

This invention relates to an improved alkaline peroxide treatment process for delignifying and bleaching nonwoody lignocellulosic agricultural residues, and more particularly to such a process for converting such residues into cellulosic fiber products suitable as a source of both reduced calorie dietary fiber for human consumption and carbohydrates for ruminant and microbe consumption.

The reduced calorie dietary fiber is characterized by high dietary fiber content and low contents of proteinaceous, fatty and ash-forming materials. It is suitable as a substitute for farinaceous flour at high replacement levels.

## BACKGROUND OF THE INVENTION

Various processes are known for converting woody and nonwoody lignocellulosic substrates into fibrous products suitable for ingestion by animals and humans.

Cattle, sheep and other ruminants are able to digest and grow on many kinds of cellulosic plant materials that provide little or no nourishment to humans and other monogastrics. Even the ruminants, however, have limited ability to efficiently digest lignocellulosic materials such as the leaves and stalks of grain-bearing grasses and the husks and hulls of the grain. This low conversion efficiency has been attributed to the close association of lignin with the cellulosic and hemicellulosic fibers in these materials. This lignin makes these cellulosics largely unavailable for digestion by the digestive juices and the microbes that inhabit ruminant stomachs. (See Jelks, U.S. 3,939,286 and Gould, U.S. 4,649,113).

Human inability to digest and assimilate cellulose and hemicellulose makes the substrates attractive as potential sources of dietary fiber. But, widespread use for this purpose has been hampered by the lignin that envelops the cellulosic fibers, by the highly crystalline character of the fibers and by the presence of components such as fatty substances (fats and oils) and ash-forming substances (including silicaceous materials) The crystalline character imparts undesirable physical properties to foodstuffs and the fatty and ash-forming substances, especially when used in relatively high proportions, adversely effect the aroma, taste, texture and mouth feel of food products.

One lignocellulosic material used as a dietary fiber is bran, the unbleached coarse outside covering of the seeds or kernels of cereal grains. Bran is used as fiber or roughage in some breakfast foods, breads and muffins. But, most of the bran is used in animal food, primarily because its high non-cellulosic content adds undesirable properties to many kinds of baked goods, particularly to white bread.

Low calorie flour substitutes made by grinding hulls of oats and other cereal grains (see Tsantir et al., U.S. 3,767,423) contain relatively large proportions of non-cellulosic components such as ash-forming substances. At desirably high flour replacement levels, food products in which they are used have a gritty aftertaste. For this reason, commercial interest has shifted largely to purified cellulose as a dietary fiber for human consumption.

Two forms of purified cellulose, both derived from wood products, are currently available. They are crystalline alpha cellulose, sold under the trade name "Solka-Floc", and microcrystalline cellulose, derived from alpha cellulose, sold under the trade name "Avicel". These products, however, are not entirely satisfactory as flour substitutes (See Glicksman et al., U.S. 3,676,150; Satin, U.S. 4,237,170; Tsantir et al., U.S. 3,767,423; and Torres, U.S. 4,219,580). The taste and texture of baked goods is adversely effected at flour replacement levels greater than about 20 percent.

Gould, U.S. 4,649,113 (1987), discloses a process (Gould Process) for converting nonwoody lignocellulosic agricultural residues (substrate) such as wheat straw into cellulosic fiber products digestible by ruminants and microbes. Gould et al., European Patent Application 228951 (1987), discloses that the delignified fiber products of U.S. 4,649,113 are also suitable as noncaloric fiber additives to compositions intended for consumption by humans.

The Gould Process involves slurrying the substrate in aqueous hydrogen peroxide ($H_2O_2$) and alkali (NaOH) at a pH of 11.2 to 11.8 and a temperature of 5° to at least 60°C. The substrate is sufficiently delignified exposing virtually all the cellulosic carbohydrates. During the alkaline peroxide treatment, the pH of the reaction medium drifts upward and is controlled by the addition of acid. The $H_2O_2$ assists in the

delignification of the substrate by oxidizing and degrading lignin to low molecular weight water-soluble compounds, principally carboxylic acids.

Gould et al. teaches that the products can serve as wheat flour substitutes at high (30% or more) replacement levels.

Although attractive as a means of converting substrates to food formulations for ruminants and humans, the Gould Process is not entirely satisfactory for commercial use. It requires rather high concentrations of both $H_2O_2$ and NaOH based on the substrate (based on the examples, at least 25% by weight of each) and suffers high losses of $H_2O_2$ through nonfunctional (nonproductive) decomposition to oxygen gas (2 $H_2O_2$ --→ 2 $H_2O$ + $O_2$). Also, we have found that the process when used to treat difficult substrates such as oat hulls results in a rapid decrease in the concentration of the $H_2O_2$, accompanied by excessive initial foaming of the reaction mixture, and the production of products that have undesirable quality (brightness, taste and aroma) for human consumption.

Decomposition of $H_2O_2$ in a highly alkaline heterogeneous reaction medium, such as when a particulate substrate is present, is not too surprising for a couple of reasons. First, $H_2O_2$ is known to be unstable in alkali, particularly at high pH. Second, heterogeneous $H_2O_2$ decomposition into $H_2O$ and $O_2$ (eatalyzed by solid surfaces) is generally far faster than homogeneous decomposition (catalyzed by a variety of soluble, mostly cationic substrates), with the rate increasing in proportion to the surface area of the solids (see Schumb et al., Hydrogen Peroxide, ACS Monograph Series, New York, Rheinhold (1955) pp 521-522).

## BRIEF DESCRIPTION OF THE INVENTION

The present invention is an improved process for converting nonwoody substrates, particularly nonwoody lignocellulosic agricultural residues, into cellulosic fiber products which are useful as a source of carbohydrates which are then digestible by ruminants and which can also be a source of low calorie dietary fiber which is ingestible by humans. The process comprises treating lignocellulosic substrates, such as, for example, oat hulls, in an aqueous solution of strong alkali followed by the addition of peroxide. The alkali treatment stage is a peroxide-free stage of the process, and, according to one aspect of the invention, adding from about 0.5 to 1.0% magnesium ions, based on the dry weight of the substrate, during this stage can decrease the consumption of peroxide, reduce rancid odor, increase silica removal, and improve product brightness and whiteness.

Substrates, such as oat and other seed hulls, which contain high oil and silica concentrations, can be effectively treated without a rapid decrease in peroxide concentration and without unwanted foaming during the initial stages of the process.

The process produces delignified and bleached cellulosic fiber products from the selected substrates which are high in dietary fiber, substantially free of nutritive proteinaceous and fatty components and ash-forming, especially silicaceous, components. The fiber products are suitable for use as farinaceous flour substitutes in replacement concentrations exceeding 20 percent by weight of the flour.

Particularly, by maintaining the pH of the alkaline peroxide solution at 9.5 or higher in combination with a temperature of 55° C or higher results in the substantially complete removal of lignins and the nutritive proteinaceous and fatty contents of the substrate and in a significant lowering of the ash-forming content. Low calorie dietary fiber that can be used in high replacement concentrations as a flour substitute can be made. The foods made from the the resulting flour have good aroma, texture and mouth feel.

## DETAILED DESCRIPTION OF THE INVENTION

The invention comprises an improved process for converting a nonwoody lignocellulosic material (Substrate) into products which are digestible by ruminants and which are ingestible by humans. The process comprises the following steps:

(a) forming a slurry of the substrate with aqueous alkali in an amount at least sufficient to wet the substrate, the slurry having a pH in the range 10 to 13 and a temperature of about 25° to 100° C, the slurry being substantially free of peroxide (Alkaline, Peroxide-Free Stage);

(b) maintaining the slurry for a sufficient time under conditions of (a) for the alkali to wet the substrate;

(c) adding sufficient water-soluble peroxide to the alkaline slurry to bleach the substrate (Alkaline-Peroxide Stage);

(d) maintaining the substrate in contact with the alkaline peroxide solution at a temperature and for a time sufficient to produce a substantially bleached, cellulosic fiber (Product); and

(e) separating the Product from the alkaline liquid (Separation Stage).

According to one aspect of the invention, the Alkaline, Peroxide-Free Stage of the process includes a further step of adding sufficient magnesium compound to provide about 0.5 to 1.0 percent magnesium ions to the slurry in step (a) based on the dry weight of the substrate. The source of such ions may be any biologically safe magnesium compound, such as the chloride, sulfate, hydroxide, oxide, carbonate, acetate, citrate, tartarate, gluconate and the like. Preferably, for best results, the magnesium compound is water soluble and selected from magnesium sulfate and magnesium chloride. The magnesium compound can be simply added to the slurry after the alkali has wetted the substrate, or the magnesium compound can be added in dissolved form with the peroxide at the beginning of the next stage of the process.

According to another aspect of the invention, the wetted substrate from the Alkaline, Peroxide-Free Stage of the process, i.e., step (a), is separated from the slurry and then, optionally, washed, before beginning the Alkaline, Peroxide Stage of the process. The separated and washed substrate, then, is contacted with an alkaline peroxide solution at an initial pH of about 8.5 to 11.0, and the process as described above is resumed. Separation of the wetted substrate and optional washing provides the following benefits over the basic process:

(a) Consumption of peroxide and alkali for the process is decreased.

(b) Bake scores are improved when the product is substituted for regular flour at high replacement levels.

(c) Product yield increases.

(d) Removal of fatty substances is increased which avoids rancid smelling and tasting by-products.

(e) Savings in chemical, water, waste treatment and energy cost due to the ability to repeatedly recycle peroxide and alkali and to concentrate organics in the recycle stream.

According to yet another aspect of the invention, the insoluble cellulosic fiber product which results from the aqueous alkaline peroxide phase, i. e., step (d), of the process is subjected to acid purification according to the following steps:

(a) optionally washing said fiber with water one or more times to remove residual chemicals, including alkali metal base and water soluble compounds;

(b) lowering the pH of said fiber to a value less than 3.0, and, preferably, in the range of 2.0-2.5 by adding an aqueous mineral acid or organic acid thereto which is selected from hydrochloric, nitric, sulfuric, citric, tartaric and acetic acid;

(c) holding the fiber product within the pH range with mixing to assure full soaking of the product for a time sufficient to remove chemical residues and enhance product brightness;

(d) washing the product a sufficient number of times to remove additional chemical residues, including free acids, and water soluble compounds; and

(e) drying the product.

The aqueous mineral or organic acid to be added is dilute and has a pH of about 2. The preferred acid for best results and economy is hydrochloric acid. Stronger acids having a pH below 2 may cause the pH of the soaked substrate to fall below a value of 2.0. While a pH below 2.0 is within the range of equivalents envisioned for the invention, a significantly greater number of subsequent washes, with a corresponding economic penalty, will be needed to remove the residual chemicals, including free acids, if the pH of the substrate is lowered to a value less than 2.0.

The pH of the soaked substrate should be lowered to a value less than about 3, and preferably between about 2.0 and 2.5 for best results. The pH of the substrate and the pH of the filtrate will be approximately equal when the substrate is fully soaked.

With normal mixing, about 15 to 30 minutes should be sufficient to assure full soaking of the product according to this aspect of the invention.

Temperature of the soaking step is not critical and can be room temperature ($23^\circ$ to $25^\circ$ C) or higher, At elevated temperatures, shorter soak times can be used and still achieve satisfactory results.

For the production of ruminant feedstuff supplements, it is only necessary to sufficiently delignify the substrate to expose substantially all the cellulosic and hemicellulosic components. The presence of residual proteins, fats, oils and ash-forming substances are of little consequence in the production and acceptability of such feedstuff supplements.

For human dietary fiber products, in addition to removal of lignin, removal of residual nutritive proteins, fats, oils and ash-formers is important. Reducing the nutritive content is needed if the product is to qualify as "dietary", that is, as a low calorie or non-fattening food. Reducing fats, particularly unsaturated fats, is needed to avoid objectionable aroma and a rancid taste in baked goods. Reducing the ash-forming substances is needed to avoid objectionable mouth feel (gritty taste and texture) in baked goods.

## The Substrate

The substrate is a nonwoody lignocellulosic material, preferably an agricultural residue. Agricultural residue includes those portions of grassy plants of the family Gramineae which remain after harvesting. Typically, leaves and stalks and the husks and hulls of grain remain after harvesting.

The substrate can be a straw such as barley straw, flax straw, oat straw, rice straw, rye straw and wheat straw. It can be corn stalks, corn cobs and corn husks. It can be bagasse, the portion remaining after the harvesting of sugar cane. It can be the hulls of cereal grains such as barley, oats and rice. It can also be other nonwoody lignocellulosic materials such as grasses not normally cultivated for agricultural purposes.

The cereal grain hulls, oat hulls in particular, are preferred for making low-calorie flour substitutes because of the general acceptance of the cereal grains as foods for humans.

Hulls generally have a high fatty substance or oil content and a high ash-forming or silica content whereas straw has a low oil and silica content. Bagasse typically has low oil but high silica content.

Oat hulls and the hulls of other cereal grains are composed largely of cellulose (25-30 wt.%), hemicellulose (45-50 wt.%) and lignin (6-11 wt.%). They also contain proteins (3-6 wt.%), fatty substances (1-2.5 wt.%), ash-forming components (3-6 wt.%, about 1/3 of which is silicaceous, calculated as $SiO_2$) and moisture (3-9 wt.%).

Straw typically has 35-40% cellulose, 30-35% hemicellulose, 15-18% lignin, 4-12% ash-forming substances, 2-4% protein and 3-10% moisture. Typically straw has a low fat content as evidenced by the ether extractable fraction that is about 1 to 1.5 percent.

Bagasse typically has 30-40% cellulose, 30-35% hemicellulose, 18-22% lignin, 2-6% ash-forming substances and 5-13% moisture. Typically bagasse has a low fat content as evidenced by the ether extractable fraction that is less than about 1 percent.

The substrate may in many cases be used as it comes from the field or may be subjected to one or more preparatory steps.

It is preferably cleaned by water or by steam washing to remove foreign matter and debris. Steam washing or steaming also deactivates biological or enzymatic hydrogen peroxide decomposition catalysts such as catalase and helps in solubilizing inorganic metal hydrogen peroxide decomposition catalysts found in some substrates.

It is preferably comminuted, as by chopping, shredding or grinding, to increase its surface area and facilitate subsequent treatments with alkali and alkaline peroxide. It is particularly preferred, however, to avoid grinding the substrate too fine, since filtration, handling and drying problems result and yield loss increases. Therefore, comminution is most preferably by chopping or shredding. Comminuted substrates tend to yield brighter bleached products if residual liquid can be effectively removed from the substrate. If the substrate is ground too fine, high efficiency separation, such as by centrifugation, is needed to effectively remove liquid. High brightness is desired in flour substitutes for use in baking white bread. Fine grinding of the dried, bleached product is preferred if the product is to be used in low-calorie food.

## Alkaline, Peroxide-Free Stage

The first step in the process of this invention is to form a slurry of the substrate in aqueous alkali in the absence of peroxide. Peroxide is added to the slurry after the substrate is held for a time at a temperature and conditions that assure uniform wetting with the alkali.

Preferably, the substrate is first slurried in water and then sufficient alkali is added as a concentrated aqueous solution to provide the desired pH.

Sufficient alkali is about 5 to 15% alkali metal base, calculated as NaOH, based on the dry weight of the substrate, preferably 8% to 12% and more preferably around 10%.

The pH of the alkaline slurry in the absence of peroxide should be about 10.0 to 13.0, preferably about 10.2 to 11.8, more preferably 10.8 to 11.2.

The alkali is an alkali metal base, preferably a hydroxide or carbonate of sodium or potassium and more preferably NaOH. The alkali or its concentrated solution (40-50 weight %) can be added all at once or in increments, as may be needed, to maintain the desired pH throughout the alkalization of substrate in the absence of peroxide.

The consistency of the slurry (weight percent dry substrate in the slurry) is not critical so long as the slurry is stirrable. Preferred consistencies are about 5% to 30% and more preferably about 10% to 20%. In general, higher consistencies may be employed if the substrate is comminuted.

The slurry is stirred in any conventional stirring apparatus, such as pipeline mixers, blenders, agitated vessel or recirculating pumps, to assure full and uniform wetting. Full and uniform wetting is indicated by the substrate becoming evenly dispersed and non-buoyant in the slurry.

The temperature for alkalizing the substrate in the absence of peroxide can vary broadly, say, about 5° to 100° C, but preferably will be about 60° to 75° C and, more preferably, about 65° to 70° C.

The duration of this alkalizing phase may range from a few minutes to an hour or more depending on the temperature and mixing efficiency; in general, the higher the temperature the shorter the time of treatment required. At 65° to 70° C, the substrate preferably is maintained in contact with the aqueous alkali under normal agitation for 5 to 30 minutes, more preferably 15 to 30 minutes. If a high efficiency mixer, such as a blender, is used, shorter times will be needed to fully and uniformly wet the substrate.

According to one aspect of the invention, magnesium ions are introduced into the slurry after the alkali has wetted the substrate. The source of the magnesium ions, as described above, can be any biologically safe magnesium compound which is water soluble, and, preferably, is selected from magnesium sulfate or magnesium chloride. The concentration of magnesium ions in the slurry of the substrate should be about 0.05 to 1.0 percent of the weight of the dry substrate. Preferably, the concentration should be 0.1 to 0.8 percent of the weight of the dry substrate.

## The Alkaline-Peroxide Stage

Sufficient peroxide is added to the aqueous alkaline slurry from the first step of treatment to delignify and bleach the substrate. The peroxide may be added all at once or over a period of time. Preferably, when the peroxide is added to the alkaline slurry of the Alkaline, Peroxide-Free Stage in a batch process, it is done in about 15 minutes. The concentration of the peroxide in the alkaline substrate slurry can vary broadly but preferably is about 1% to 15% of the original dry weight of the substrate, preferably 3% to 10% and more preferably about 5% to 8%.

The peroxide may be any water-soluble peroxide, such as hydrogen peroxide, sodium peroxide, sodium percarbonate, or other peroxide hydrolyzable in aqueous alkali to form $H_2O_2$ or its conjugate base, the hydroperoxide anion $HO_2^-$ and peroxy acids such as peroxyacetic acid and monoperoxysulfuric acid. $H_2O_2$ is preferred for its ready availability as a concentrated aqueous solutions, 35-70% by weight, and its ease of handling. If other than hydrogen peroxide is used, the total amount of alkali needed should be adjusted to account for the "alkali" content of the peroxide.

As $H_2O_2$ (pKa 10.8) is a stronger acid than $H_2O$ (pKa 14), its addition to the alkaline slurry decreases the pH of the slurry. Also, the pH decreases as hydroxide ion is consumed in neutralizing the carboxylic degradation products derived from lignin to carboxylate ions and in hydrolyzing proteins and saponifying fats and oils to carboxylate ions since carboxylate ions are substantially weaker bases than hydroxide ion. Accordingly, the pH should be adjusted, as needed, by the addition of alkali, to maintain a pH of about 9.5 to 11.0, preferably about 10.0 to 10.5.

The total alkali, taken as NaOH, required in the overall process (both Alkaline, Peroxide-free and Alkaline Peroxide Stages) will generally not exceed 15% of the original dry weight of the substrate.

The reaction mixture is preferably agitated at a sufficient temperature and time to produce a substantially delignified and bleached cellulosic fiber product.

Agitation of the slurry is in any conventional stirring apparatus, such as pipeline mixers, blenders, agitated vessel or recirculating pumps.

The temperature of the alkaline-peroxide stage can vary broadly, say, about 25° to 90° C, but preferably will be about 50° to 85° C and, more preferably, about 60° to 80° C.

Reaction time can be as short as 1/2 hour and as long as 24 hours, depending on the temperature. Typical time-temperature combinations are 1-3 hours at 65°-85° C, 3-6 hours at 50°-60° C and 15-24 hours at room temperatures.

When the cellulosic fiber product is to be used as a low calorie dietary fiber, reaction time at a given pH should be long enough, not only delignify, but to substantially hydrolyze and remove the proteinaceous, fatty and silicaceous constituents from the substrate.

Removal of lignin, proteins, fats and oils, silica and other ash-forming substances can be determined during or after the process by direct analysis using standard methods known to the art. Delignification can also be determined indirectly by measuring the quantity of material removed and solubilized in the aqueous phase. In general, the yield loss amounts to about 25% to about 37% of the original dry weight of the substrate.

To reduce the silica content to less than 1% by weight of the product in a reasonable period of time, say 1-6 hours, the pH should be at least about 10.0, preferably 10.4 or greater but not greater than about 11.8 throughout the reaction, the latter to avoid solubilizing hemicellulose. The temperature should be 50° to 85° C, preferably 60° to 80° C. Lower ash results when higher temperatures and shorter treat times are used. Brightness and peroxide efficiency is sacrificed if the temperature is too high.

In a preferred embodiment of the invention, the fully wetted substrate is first removed from the liquor of the Alkaline, Peroxide-Free Stage of the process by any standard separation method known in the art. For example, filtration or centrifugation may be used to separate the wetted substrate. Alternatively, the free liquid may be simply drained from the slurry. Preferably, separation is accomplished so that substantially all the liquor is removed from the slurry, leaving a damp substrate of about 20 to 50 percent consistency. While most of the protein, fat, lignin and peroxide comsuming substances are removed with the alkali solution, the damp substrate may be subjected to one or more washes to remove yet additional undesired material from the substrate before further processing.

The damp substrate is then reslurried and treated in the Alkaline-Peroxide Stage as previously described.

## Separation of Product

Upon completion of the alkaline peroxide treatment, the insoluble cellulosic fiber product is separated from the aqueous alkaline phase, washed with water one or more times to remove alkali metal base and water-soluble compounds, neutralized as needed with any aqueous mineral acid or organic acid that is non-toxic, such as hydrochloric, nitric, sulfuric, citric, tartaric and acetic acid, rewashed with water and, if desired, dried. In a preferred embodiment of the invention neutralization includes acid purification which is accomplished by adding enough acid to the fiber product to lower the pH to a value less than about 3, and, preferably, to a value in the range of about 2.0-2.5. The product is then held at that pH with adequate mixing to assure full soaking of the product for a time sufficient to remove chemical residues and enhance product brightness. Thereafter, the product is washed one or more times as desired, separated from the wash liquid and dried.

Preferably, the total ash content should be less than 2.5% and, more preferably, less than 2% by weight; the silica content (expressed as $SiO_2$) should be less than 1%. The total ash of the recovered product depends mainly on the residual silica content and the alkali metal ion retained within the fibers of the product. Therefore, neutralization, acid purification, and thorough washing is preferred to ensure the substantially complete removal of water-soluble inorganic content.

The separated product is dried in a conventional drier such as a rotary dryer, a fluid bed dryer, a pan dryer or a spray dryer. Preferably, the product is first dewatered, for example, by pressing or centifugation, prior to drying. Drying temperatures depend on the type of dryer but should be high enough to efficiently dry, but low enough to avoid charring or darkening of the product. Preferably, product temperatures should not exceed 105° C.

## Product

The dried product can be ground for use as a dry ruminant feedstuff or dietary fiber for substitution at high replacement levels as flour used to make cakes, breads, pasta, pizza and other baked goods for human consumption. It can also be used generally is foods as a process aid, an anticaking agent, a binding agent, or a carrier.

Particularly in the case of a dietary fiber, the product of this invention is preferably fine ground by itself or co-ground with the regular flour with which it ultimately is to be mixed. Regular flour can be any flour such as wheat flour, corn flour, rice flour, rye flour or oat flour and need not be from the same plant as the fiber of this invention. Co-grinding or milling with grains such as rice, corn, wheat, barley, oat, rye, etc. may be done after a preblending operation, to give a uniformly distributed mixture of regular flour and the dietary fiber flour of this invention.

In preferred embodiments of the invention, flour substitutes having low levels (in weight %) of proteins (less than 1), fatty substances (less than 0.1) and ash-forming substances (less than 2.5) including the silicaceous material, taken as $SiO_2$, (less than 1) are produced according to the invention.

In preferred embodiments of the invention which are designed to provide bleached cellulosic fiber products for use as low calorie dietary flour substitutes, the degree of whiteness of the bleached product, or its brightness value, should be high to meet the demands of the white flour industry. The brightness, as determined with a Hunter Color Difference Meter, Model D-2, of the dry product tamped flush with the rim of a round, 6 cm diameter x 1.8 cm deep metal can, should be at least about 75, preferably about 80 or more. In comparison, unbleached substrates have brightness values around 65 or less.

## EXAMPLES

The following examples are intended only to further illustrate the invention and are not intended to limit the scope of the invention.

Suitability of the product for use as a flour substitute ultimately is determined by bake tests. The products from the examples were submitted for such tests which were run according to the following procedure:

1. The product was mixed with wheat (white bread) flour at a 40 weight percent replacement level.

2. Bread was made under standard baking conditions.

3. A "Score" was determined by trained laboratory personnel in the baking laboratory. They evaluated the loaves for loaf volume, external color, crumb color, break and shred, aroma, taste, mastication, grain presence, texture, and symmetry. Each criteria is given a point value. The total point value for all the criteria is 100. For comparison, white bread made with unmodified regular flour under standard baking conditions typically receives a score of about 90.

## EXAMPLE 1

Clean, water-washed unground oat hulls (900 grams) containing 10.2% $H_2O$ were added to 15 liters of deionized (DI) water at 65°C under vigorous agitation. The pH of the slurry was 6.03. The pH was adjusted to 10.52 by the addition of 444.02 grams of 10% aqueous NaOH (5.5% NaOH based on the dry weight of the hulls).

After 5 minutes, 133.53 grams of 33.7% aqueous $H_2O_2$ (5.6% based on the dry weight of the hulls) were added, the pH dropping to 9.6. The solution concentration of $H_2O_2$ was about 0.29% by weight.

The slurry was agitated at 65°C for 2 hours. The resulting reaction mixture had a pH of 9.11 and a $H_2O_2$ concentration of 0.155%.

The fibrous product was filtered off and slurried two times in 15 liters of DI water, each time for 30 minutes. The second aqueous slurry was acidified to pH 6 and held at 75°C for 10 minutes, washed to pH 6.5 with DI water, pressed to remove the bulk of the water in the product, and the product tray-dried overnight at about 25°C to a moisture content of 11.9%.

Process conditions and product properties are summarized in Table I.

The tabulated data suggest that the use of unground hulls and a low caustic content based on the hulls, resulting in a low final pH, has resulted in a low-brightness product, with a relatively low yield loss, low water absorbency and high residual ash content, a product not suitable as low calorie additive in white bread.

## EXAMPLE 2

The procedure of Example 1 was repeated except that (a) the initial pH was adjusted to 11.0 by adding 229.27 grams of 29.85% aqueous NaOH (8.5% NaOH based on the dry weight of the hulls), (b) the pH after addition of the $H_2O_2$ solution was 10.27, and (c) the pH was maintained over the next 2 hours at 10.3 by the

8

incremental addition of a total of 45.31 grams of 29.85% NaOH (1.6% on dry oat hull basis). The total NaOH used was 10.1% dry oat hulls.

Ten minutes after the addition of the peroxide, the $H_2O_2$ content of the solution was 0.2592% (90% of the amount of $H_2O_2$ added). After 2 hours at 65°C the $H_2O_2$ concentration had decreased to 0.0921% (about 31% of the original quantity). The final pH was 10.3.

The insoluble fraction of the reaction mixture was recovered as in Example 1. Process conditions and product properties are summarized in Table I.

Comparison of results from Example 1 with results from Example 2 shows that the higher caustic/high pH run (11.0 initial pH and 10.3 final pH) resulted in a bleached fiber product having a higher capacity to bind water and a substantially lower ash content, both features which are desirable in a dietary fiber flour substitute.

## EXAMPLE 3

Clean, water-washed oat hulls (900 grams) containing 10.18% moisture were added to 15 liters of DI water at ambient temperature (about 25°C) and agitated. Twenty six (26) grams of 49.42% aqueous NaOH (8.9% NaOH on the dry weight of the hulls) were then added, raising the pH from 5.85 to 11.50.

Ten minutes later 262.62 grams of 34.27% aqueous $H_2O_2$ were added, resulting in a decrease of the pH to 9.6. The pH was maintained at 11.5 over the next 4 hours by the addition of a total of 120.36 grams of 49.42% NaOH solution alternating with a total of 34.13 grams of 10% aqueous HCl.

The $H_2O_2$ concentration was monitored every 2 hours. After the first 2 hours concentration had decreased to 26.8% of the initial concentration. After 4 hours, the $H_2O_2$ concentration had decreased to about 18% of the initial value. After 24 hours, when the reaction was terminated, the pH was 10.4 and the residual $H_2O_2$ content was 4.8% of the initial concentration.

The product, which had a noticeably yellowish cast, was recovered by water-washing, adjusting the pH to 6.5-7.0 with aqueous 10% HCl as in the previous Examples and pressing to remove the bulk of the water. The product was then tray-dried overnight at about 25°C) and then in a tumble dryer at about 60°C to a moisture content of 9.44%.

Process conditions and product characteristics are given in Table I.

The brightness of the product is improved over those of Examples 1 and 2. The water-binding capacity, though slightly improved over that of Example 1, is inferior to that of Example 2 made at the higher temperature (65° vs 25°C). The ash content is also significantly higher than in Example 2.

## EXAMPLE 4

Ground oat hulls (2004.16 grams) containing 9.47% moisture (equivalent to 1814.37 grams of dried substrate) were slurried in 10 liters of DI water at 65°C under agitation. Then, 367.13 Grams of 49.42% aqueous NaOH (providing a 10% concentration of NaOH based on the dry weight of the hulls and a pH of 11.7) were added over a 5 minute period.

Five minutes later, 270.5 grams of 33.54% aqueous $H_2O_2$ were added dropwise over a 60 minute period (5% $H_2O_2$ of the dry weight of the oat hulls), at the end of which the temperature was 64.5°C, the pH 10.6 and the $H_2O_2$ content of the solution was 47% of the total $H_2O_2$ added. The reaction slurry was held at 65°C for 2 hours after the addition of peroxide was complete. The final pH was 10.3; the residual $H_2O_2$ was 21% of the original total amount.

The insoluble product was filtered through cheesecloth, washed several times with DI water, pH adjusted to 6.88, rewashed, pressed as before and dried at about 25°C in a pan. The bleached product weighed 1284.85 grams and contained 11.7% moisture.

Process details and product properties are summarized in Table I.

## EXAMPLE 5

The procedure of Example 4 was followed except that (a) only 257 grams of 49.42% aqueous NaOH were added to the aqueous slurry to provide an initial pH of 11.4, (b) the quantity of NaOH added corresponded to 7% of the dry weight of the hulls (vs. 10% in Example 4), (c) the addition of the 33.5% $H_2O_2$ solution (providing 5% $H_2O_2$ based on the dry weight of the hulls as in Example 4) took 25 minutes (instead of 60) and resulted in a pH decrease to 9.96, at which point the solution $H_2O_2$ concentration was 0.521% by weight (about 60% of the original (calculated) concentration), and (d) the final pH was 9.40, the peroxide concentration 0.271% (31.4% of the original concentration).

The insoluble fraction was recovered from the reaction mixture as described in the previous Examples and had a net weight of 1360.9 grams of which 4.99% was moisture.

Process details and product properties are summarized in Table I.

Comparison of Example 5 data with those for Example 4 show that use of only 7% NaOH vs. 10% lead to a lower final pH (9.4 vs. 10.3) and resulted in an objectionably high ash content (3.39% vs. 2.07%).

## EXAMPLE 6

The procedure of Example 4 was repeated except that (a) the addition of the peroxide solution was completed in only 15 minutes (vs. 60 minutes), (b) the $H_2O_2$ content at the completion of the addition was 64% of the total amount added (vs. about 47%), and (c) the reaction mixture was held at 63 to 66°C for 2 hours after the addition of the peroxide.

The final pH was 10.42 (vs. 10.3) and the residual $H_2O_2$ content was 27.5% of the original (vs. 21%), the higher values in this Example evidently reflecting the shorter $H_2O_2$ addition time and, in part, the shorter reaction time.

The product was recovered from the reaction mixture as described in the previous Examples. It weighed 1266.1 grams of which 10% was moisture.

Process details and product properties are given in Table I. The data show that this product exhibits superior properties overall.

TABLE I

| SUMMARY OF EXAMPLES | | | | | | | | |
|---|---|---|---|---|---|---|---|---|
| | | Untreated Hulls | Ex. 1 | Ex. 2 | Ex. 3 | Ex. 4 | Ex. 5 | Ex. 6 |
| Ground | | | No | No | No | Yes | Yes | Yes |
| Consistency, % | | | 5.7 | 15.1 | 5.7 | 15.1 | 15.1 | 15.1 |
| NaOH % (a) | | | 5.5 | 10.1 | 8.9 | 10 | 7 | 10 |
| $H_2O_2$ % (a) | | | 5.6 | 5.6 | 10.0 | 5 | 5 | 5 |
| Temp./Hrs. | | | 65/2 | 65/2 | 25/24 | 65/2 | 65/2 | 65/2 |
| pH In/Out | | | 10.5/9.1 | 11.0/10.3 | 11.5/10.4 | 11.7/10.2 | 11.4/9.4 | 11.7/10.3 |
| Yield Loss, % | | | 13.5 | 23.7 | 26.0 | 37.5 | 28.7 | 37.2 |
| Brightness, (b) | | 55-65 | 72.4 | 72.2 | 76.0 | 79.7 | 82.9 | 82.4 |
| Dietary Fiber, % | | 81.7-83.3 | 95.2 | 95.8 | 95.2 | 97.1 | 94.9 | 96.2 |
| Proteins, % | | 3.1-3.2 | 0.9 | 0.7 | 0.9 | 0.6 | 0.8 | 0.6 |
| Fats, % | | 0.9-1.0 | 0.19 | 0.48 | 0.16 | 0.0 | 0.02 | 0.06 |
| Ash, % | | 5.1-5.7 | 3.5 | 1.91 | 2.83 | 2.07 | 3.39 | 1.73 |
| Water-Binding, cc/gm | | 2.29-2.39 | 2.29 | 2.60 | 2.38 | 2.42 | 2.89 | 3.33 |
| Bake Rating Score (c) | | 65 | 68 | 71.5 | 71.5 | 68.5 | 70.5 | 77.5 |

(a) Based on dry weight of the hulls.
(b) Hunter Color Difference Meter D2 ratings.
(c) With 100% wheat flour the rating is 90; these results represent 40% replacement of wheat flour with unbleached or bleached oat hulls.

Examples 7 to 15 show the process including recycle of the alkali and the peroxide and the acid washing of delignified and bleached oat hulls. Example 16 shows the results of bake tests using product made according to Examples 7 to 15 at high replacement levels (40 weight %).

## EXAMPLE 7

One hundred grams (oven-dried weight) at 91.3% consistency of slightly shredded oat hulls having a small amount of fines (109.5 grams) were added to 890.5 grams of process water obtained from a city potable water supply to make a 10 wt.% slurry. The slurry was stirred at room temperature (23-25° C) for 15 minutes and then filtered without pressing.

The filtered solids were then reslurried in enough process water to make a 1000 gram slurry which was heated to 65° C. Sodium hydroxide (20.5 grams of 48.8 wt.% NaOH solution) was added to the slurry and stirred for 1/2 hour at 65° C and a pH of 11.86. On a 100 wt.% basis, the NaOH added was 10 wt.% of the dry weight of the hulls. The solids were then filtered without pressing. The filtrate (Alkaline Filtrate) was saved for recycling.

The wet solids were then reslurried in enough process water to make a 1000 gram slurry which was heated to 65° C and found to have a pH of 10.84. Hydrogen peroxide (21.5 grams of a 32.6 wt.% $H_2O_2$ solution) was then added to the slurry which was stirred for 2 hours with the temperature controlled at about 65° C (temperature varied from 63° to 65° C). On a 100 wt.% basis, the $H_2O_2$ added was 7 wt.% of the dry weight of the hulls. The pH was measured every 15 minutes. It dropped to 9.22 by the end of the 2 hours.

At the end of the 2 hours, the solids were filtered but not pressed and the filtrate was saved for recycling (Peroxide Filtrate). The residual concentration of hydrogen peroxide in the filtrate was 0.6530% compared to the theoretical concentration that would result if all of the hydrogen peroxide were recovered (0.7606%).

The filter cake was then washed five times with 500 milliliters of process water. Following the fifth wash, the filter cake was reslurried in process water to make 1000 grams of slurry. Enough hydrochloric acid was added to lower the pH to and maintain it at 2.2 to 2.4 for 15 minutes. The solids were then filtered but not pressed (except for the last wash) and washed five times with 500 ml of process water each time. After the last wash, the solids were pressed to remove as much liquid as possible and then dried in a fluid bed dryer.

The dried product was found to have a brightness of 77.5, an ash content of 1.99%, a sodium ion content of 71 parts per million (ppm), a $SiO_2$ content of 0.82%, and hydrogen peroxide content of 2.7 ppm. Yield loss was 29.3%.

## EXAMPLE 8

The procedure of Example 7 was repeated except that recycled NaOH and $H_2O_2$ were used. Instead of fresh NaOH solution, 655.3 grams (2.8 grams of 100% NaOH) of the Alkaline Filtrate from Example 1 was used. 14.8 grams of fresh 48.8% NaOH solution (7.2 grams of 100% NaOH) was added to adjust the NaOH concentration to 10 wt.% of the dry weight of the hulls. Instead of fresh $H_2O_2$ solution, 495.2 grams (3.2 grams of 100% $H_2O_2$) of the Peroxide Filtrate from Example 1 was used. 11.7 grams of fresh 32.6% $H_2O_2$ solution (3.8 grams of 100% $H_2O_2$) was added to adjust the $H_2O_2$ concentration to 7 wt.% of the dry weight of the hulls.

At the end of the 2 hours, the solids were filtered but not pressed and the filtrate was saved for recycling (Peroxide Filtrate). The residual concentration of hydrogen peroxide in the filtrate was 0.5543% compared to the theoretical concentration that would result if all of the hydrogen peroxide were recovered (0.7606%).

The dried solids were found to have a brightness of 78.8, an ash content of 2.47%, a sodium ion content of 134 ppm, a $SiO_2$ content of 0.98%, and hydrogen peroxide content was non-detectable. Yield loss was 30.2%.

## EXAMPLE 9

The procedure of Example 7 was repeated except that recycled NaOH and $H_2O_2$ were used. Instead of fresh NaOH solution, 663.9 grams (3.19 grams of 100% NaOH) of the Alkaline Filtrate from Example 8 was used. 11.9 grams of fresh 48.8% NaOH solution (5.8 grams of 100% NaOH) was added to adjust the NaOH concentration to 9 wt.% of the dry weight of the hulls. Instead of fresh $H_2O_2$ solution, 461.3 grams (2.4 grams of 100% $H_2O_2$) of the Peroxide Filtrate from Example 8 was used. 14.1 grams of fresh 32.6% $H_2O_2$

11

solution (4.6 grams of 100% $H_2O_2$) was added to adjust the $H_2O_2$ concentration to 7 wt.% of the dry weight of the hulls.

At the end of the 2 hours, the solids were filtered but not pressed and the filtrate was saved for recycling (Peroxide Filtrate). The residual concentration of hydrogen peroxide in the filtrate was 0.6156% compared to the theoretical concentration that would result if all of the hydrogen peroxide were recovered (0.7606%).

The dried solids were found to have a brightness of 77.3, an ash content of 2.03%, a sodium ion content of 123 ppm, a $SiO_2$ content of 0.77%, and hydrogen peroxide content of 2.2 ppm. Yield loss was 26.7%.

## EXAMPLE 10

The procedure of Example 7 was repeated except that recycled NaOH and $H_2O_2$ were used. Instead of fresh NaOH solution, 645.7 grams (5.3 grams of 100% NaOH) of the Alkaline Filtrate from Example 9 was used. 11.9 grams of fresh 48.8% NaOH solution (5.3 grams of 100% NaOH) was added to adjust the NaOH concentration to 8 wt.% of the dry weight of the hulls. Instead of fresh $H_2O_2$ solution, 559.1 grams (2.9 grams of 100% $H_2O_2$) of the Peroxide Filtrate from Example 9 was used. 12.6 grams of fresh 32.6% $H_2O_2$ solution (4.1 grams of 100% $H_2O_2$) was added to adjust the $H_2O_2$ concentration to 7 wt.% of the dry weight of the hulls.

At the end of the 2 hours, the solids were filtered but not pressed and the filtrate was saved for recycling (Peroxide Filtrate). The residual concentration of hydrogen peroxide in the filtrate was 0.4948% compared to the theoretical concentration that would result if all of the hydrogen peroxide were recovered (0.7606%).

The dried solids were found to have a brightness of 77.3, an ash content of 2.20%, a sodium ion content of 123 ppm, a $SiO_2$ content of 0.83%, and hydrogen peroxide content was non-detectable. Yield loss was 25.9%.

## EXAMPLE 11

The procedure of Example 8 was repeated except that recycled NaOH and $H_2O_2$ were used. Instead of fresh NaOH solution, 661.2 grams (2.6 grams of 100% NaOH) of the Alkaline Filtrate from Example 10 was used. 13.1 grams of fresh 48.8% NaOH solution (6.4 grams of 100% NaOH) was added to adjust the NaOH concentration to 9 wt.% of the dry weight of the hulls. Instead of fresh $H_2O_2$ solution, 699.1 grams (2.7 grams of 100% $H_2O_2$) of the Peroxide Filtrate from Example 10 was used. 13.2 grams of fresh 32.6% $H_2O_2$ solution (4.3 grams of 100% $H_2O_2$) was added to adjust the $H_2O_2$ concentration to 7 wt.% of the dry weight of the hulls.

At the end of the 2 hours, the solids were filtered but not pressed and the filtrate was saved for recycling (Peroxide Filtrate). The residual concentration of hydrogen peroxide in the filtrate was 0.3552% compared to the theoretical concentration that would result if all of the hydrogen peroxide were recovered (0.7606%).

The dried solids were found to have a brightness of 76.8, an ash content of 1.82%, a sodium ion content of 127 ppm, a $SiO_2$ content of 0.67%, and hydrogen peroxide content of 1.9 ppm. Yield loss was 27.8%.

## EXAMPLE 12

The procedure of Example 7 was repeated except that recycled NaOH and $H_2O_2$ were used. Instead of fresh NaOH solution, 642.2 grams (2.9 grams of 100% NaOH) of the Alkaline Filtrate from Example 11 was used. 14.5 grams of fresh 48.8% NaOH solution (7.1 grams of 100% NaOH) was added to adjust the NaOH concentration to 10 wt.% of the dry weight of the hulls. Instead of fresh $H_2O_2$ solution, 489.5 grams (1.7 grams of 100% $H_2O_2$) of the Peroxide Filtrate from Example 11 was used. 16.3 grams of fresh 32.6% $H_2O_2$ solution (5.3 grams of 100% $H_2O_2$) was added to adjust the $H_2O_2$ concentration to 7 wt.% of the dry weight of the hulls.

At the end of the 2 hours, the solids were filtered but not pressed and the filtrate was saved for recycling (Peroxide Filtrate). The residual concentration of hydrogen peroxide in the filtrate was 0.3580% compared to the theoretical concentration that would result if all of the hydrogen peroxide were recovered (0.7606%).

The dried solids were found to have a brightness of 75.3, an ash content of 1.79%, a sodium ion content of 168 ppm, a $SiO_2$ content of 0.51%, and hydrogen peroxide content was non-detectable. Yield loss was 26.1%.

## EXAMPLE 13

The procedure of Example 7 was repeated except that recycled NaOH and $H_2O_2$ were used. Instead of fresh NaOH solution, 697.7 grams (3.7 grams of 100% NaOH) of the Alkaline Filtrate from Example 12 was used. 12.9 grams of fresh 48.8% NaOH solution (6.3 grams of 100% NaOH) was added to adjust the NaOH concentration to 10 wt.% of the dry weight of the hulls. Instead of fresh $H_2O_2$ solution, 404.9 grams (1.1 grams of 100% $H_2O_2$) of the Peroxide Filtrate from Example 12 was used. 18.1 grams of fresh 32.6% $H_2O_2$ solution (5.9 grams of 100% $H_2O_2$) was added to adjust the $H_2O_2$ concentration to 7 wt.% of the dry weight of the hulls.

At the end of the 2 hours, the solids were filtered but not pressed and the filtrate was saved for recycling (Peroxide Filtrate). The residual concentration of hydrogen peroxide in the filtrate was 0.5098% compared to the theoretical concentration that would result if all of the hydrogen peroxide were recovered (0.7606%).

The dried solids were found to have a brightness of 77.0, an ash content of 1.68%, a sodium ion content of 115 ppm, a $SiO_2$ content of 0.66%, and hydrogen peroxide content of 2.5 ppm. Yield loss was 26.1%.

## EXAMPLE 14

The procedure of Example 7 was repeated except that recycled NaOH and $H_2O_2$ were used. Instead of fresh NaOH solution, 656.7 grams (3.6 grams of 100% NaOH) of the Alkaline Filtrate from Example 13 was used. 13.1 grams of fresh 48.8% NaOH solution (6.4 grams of 100% NaOH) was added to adjust the NaOH concentration to 10 wt.% of the dry weight of the hulls. Instead of fresh $H_2O_2$ solution, 474.1 grams (2.2 grams of 100% $H_2O_2$) of the Peroxide Filtrate from Example 13 was used. 14.7 grams of fresh 32.6% $H_2O_2$ solution (4.8 grams of 100% $H_2O_2$) was added to adjust the $H_2O_2$ concentration to 7 wt.% of the dry weight of the hulls.

At the end of the 2 hours, the solids were filtered but not pressed and the filtrate was saved for recycling (Peroxide Filtrate). The residual concentration of hydrogen peroxide in the filtrate was 0.5262% compared to the theoretical concentration that would result if all of the hydrogen peroxide were recovered (0.7606%).

The dried solids were found to have a brightness of 77.8, an ash content of 1.55%, a sodium ion content of 165 ppm, a $SiO_2$ content of 0.47%, and hydrogen peroxide content was non-detectable. Yield loss was 27.9%.

## EXAMPLE 15

The procedure of Example 7 was repeated except that recycled NaOH and $H_2O_2$ were used. Instead of fresh NaOH solution, 672.8 grams (3.8 grams of 100% NaOH) of the Alkaline Filtrate from Example 14 was used. 12.7 grams of fresh 48.8% NaOH solution (6.2 grams of 100% NaOH) was added to adjust the NaOH concentration to 10 wt.% of the dry weight of the hulls. Instead of fresh $H_2O_2$ solution, 680.9 grams (2.7 grams of 100% $H_2O_2$) of the Peroxide Filtrate from Example 14 was used. 13.2 grams of fresh 32.6% $H_2O_2$ solution (4.3 grams of 100% $H_2O_2$) was added to adjust the $H_2O_2$ concentration to 7 wt.% of the dry weight of the hulls.

At the end of the 2 hours, the solids were filtered but not pressed and the filtrate was saved for recycling (Peroxide Filtrate). The residual concentration of hydrogen peroxide in the filtrate was 0.4780% compared to the theoretical concentration that would result if all of the hydrogen peroxide were recovered (0.7606%).

The dried solids were found to have a brightness of 76.7, an ash content of 1.55%, a sodium ion content of 153 ppm, a $SiO_2$ content of 0.53%, and hydrogen peroxide content of 1.1 ppm. Yield loss was 29.8%.

## EXAMPLE 16 - BAKE TESTS

Suitability of the product for use as a flour substitute ultimately is determined by bake tests. The product ("Fiber") made according to the process in Examples 7 through 15 were submitted for such tests which were run according to the following procedure:

1. The product ("Fiber") was mixed with wheat (white bread) flour at a 40 weight percent replacement level.

2. Bread was made by the "Sponge and Dough" method under standard baking conditions. A sponge was first made by mixing the following ingredients in a Hobart A-120 mixer with a McDuffee bowl and a three-prong hook for 1 minute at the low (no. 1) speed and then for 1 minute at the middle (no. 2) speed at $77° ± 1°$ F:

| Ingredients | Weight (grams) |
|---|---|
| Bakers Patent Flour | 300 |
| Fiber[a] | 200 |
| Vital Yeast Glutton | 30 |
| Mineral Yeast Food | 3 |
| PD-321 | 2.5 |
| XPANDO | 5 |
| Compressed Yeast | 15 |
| Water | 700[b] |

[a]Laboratory Pin Milled
[b]cubic centimeters

The sponge was fermented in a fermentation box for 3 hours at 86° F and 85% relative humidity and then remixed with the following additional "Dough" ingredients for 1 minute at No. 1 speed and then to development at No. 2 speed (about 10 minutes):

| Ingredients | Weight (grams) |
|---|---|
| Bakers Patent Flour | 200 |
| Vital Wheat Glutton | 30 |
| Salt | 15 |
| Calcium Propionate | 2.5 |
| Compressed Yeast | 10 |
| High Fructose Corn Syrup | 35[a] |
| Water | 100[a] |
| Ascorbic Acid | 10[a] |

[a]cubic centimeters

The remixed dough was allowed to rest in the fermentation box for 10 minutes at 86° F and 85% relative humidity and was then divided into 520 gram pieces, rounded by hand, molded in a cross grain molder and proofed at 110° F and 81% relative humidity for about 1 hour until it had doubled in size. The loaves were then baked at 430° F for 18 minutes in pans having top inside dimensions of 4 3/8 inches by 10 inches, bottom outside dimensions of 4 3/4 inches by 9 3/8 inches and a depth of 2 3/4 inches.

3. A "Score" was determined for the loaves by trained laboratory personnel in the baking laboratory. They evaluated the height of the loaf (50), color (10), aroma (10), taste (10), graininess (10), and texture (10) Each criteria is measured against the maximum point value in the parentheses. The total point value for all the criteria is 100.

The bread baked using the product of the process in which no alkali or peroxide are recycled and that using the product from the recycling processes had the same bake scores. The breads predictably had decreased height, texture and graininess ratings because the fiber was laboratory pin milled. Finer grinding, particularly if the Bakers Patent Flour and the product were co-ground, would be expected to yield a bread with improved height, texture and graininess having a total score in excess of 90. The ratings were: Height - 40, Color - 8, Aroma - 8, Taste - 8, Graininess - 6, and Texture - 6 for a total score of 76. The bread had 40 calories per 28 grams.

As a comparison Colonial Standard "Lite Bread", a commercial low calorie bread containing half the fiber and having 40 calories per 21 grams was used a the standard with the following ratings: Height - 50, Color - 10, Aroma - 10, Taste - 10, Graininess - 10, and Texture - 10 for a total score of 100.

**Claims**

1. A process for converting nonwoody lignocellulosic substrates into products which are digestible by ruminants and which are ingestible by humans comprising the following steps:

(a) forming a slurry of the substrate with aqueous alkali selected from sodium or potassium hydroxide or a carbonate in an amount at least sufficient to wet the substrate, the slurry having a pH in the range 10 to 13 and a temperature of about 25° to 100° C, the slurry being substantially free of peroxide;

(b) maintaining the slurry for a sufficient time of at least 15 minutes under conditions of (a) for the alkali to wet the substrate;

(c) adding a water-soluble peroxide in an amount sufficient to bleach the substrate to the slurry;

(d) maintaining the substrate in contact with the alkaline peroxide solution at a temperature of from 25° to 90° C, at a pH of 9.5 to 11.0 and for a time sufficient to produce a substantially bleached, cellulosic fiber; and

(e) separating the bleached fiber from the resulting alkaline liquid.

2. The process of Claim 1 wherein the substrate comprises hulls of cereal grains.

3. The process of Claim 2 wherein the substrate comprises oat hulls.

4. The process of Claim 1, Claim 2, or Claim 3 which includes the additional step of adding a biologically safe magnesium compound to the slurry of step (a) in sufficient quantity to provide from 0.05 to 1.0 percent magnesium ions based on the dry weight of the substrate.

5. The process of Claim 1, Claim 2, or Claim 3 which includes, immediately following step (a), the additional steps of

(a) separating the wetted substrate from the aqueous alkali in the slurry and optionally washing it at least once with water;

(b) forming a new slurry of the wetted substrate in an alkaline peroxide solution which contains about 1 to 15 wt% peroxide based on the original dry weight of the substrate at a temperature of about 25° to 90° C and an initial pH of about 8.5 to 11.0; and

(c) adding a biologically safe magnesium compound to the new slurry of step (b) in sufficient quantity to provide from 0.05 to 1.0 percent magnesium ions based on the dry weight of the substrate.

6. The process of Claim 4 or Claim 5 in which the peroxide is hydrogen peroxide.

7. The process of claim 6 wherein the bleached substrate is separated from the alkaline liquid of step (e) and purified according to the following steps:

(a) separating the insoluble cellulosic substrate from the aqueous alkaline peroxide solution;

(b) adding a non-toxic, aqueous mineral or organic acid to the bleached substrate in sufficient quantity to adjust the pH thereof to a value in the range of 3.0 to 2.0;

(c) holding the substrate at that pH with mixing to assure full soaking and for a time sufficient to remove chemical residues and water soluble compounds;

(d) washing the substrate at least once with water to remove additional chemical residues and water soluble compounds;

(e) separating the bleached substrate from the wash liquid; and
(f) drying the substrate.

8. The process of Claim 1, Claim 2, or Claim 3 wherein the alkali, calculated as sodium hydroxide, is about 5 to 15 percent of the dry weight of the substrate.